(19) **Europäisches Patentamt** / **European Patent Office** / **Office européen des brevets**

(11) **EP 4 701 127 A1**

(12) # EUROPEAN PATENT APPLICATION

(43) Date of publication:
**25.02.2026 Bulletin 2026/09**

(21) Application number: **24195545.9**

(22) Date of filing: **21.08.2024**

(51) International Patent Classification (IPC):
**H04L 9/08** *(2006.01)* **H04L 9/00** *(2022.01)*

(52) Cooperative Patent Classification (CPC):
**H04L 9/50; H04L 9/0891;** H04L 9/3247

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **THALES DIS CPL USA, INC.**
**Austin, TX 78759 (US)**

(72) Inventor: **SWAMI, Saran**
**201002 Uttar Pradesh (IN)**

(74) Representative: **Grevin, Emmanuel**
**Thales Dis France SAS**
**Intellectual Property Department**
**Avenue du Jujubier, Z.I. Athélia IV**
**13705 La Ciotat (FR)**

(54) **SYSTEM AND METHOD FOR ENHANCING BLOCKCHAIN NODE SECURITY BY KEY ROTATION**

(57) A system or method for enhancing blockchain node security in a computing environment can include one or more processors and memory having computer instructions which when executed causes the one or more processors to perform certain operations. The operations can include providing a protection key pair for each blockchain node in the nodal network, providing a keys blockchain for recording nodal-transaction keys and a protection key of the protection key pair, and recording a blockchain transaction that uses an additional signature of a transaction by the protection key.

Fig. 6

## Description

### TECHNICAL FIELD

The present embodiments relate generally to systems and methods of protecting blockchain nodes and blockchain transactions. More particularly, the system and method relate to providing a system and method for protecting blockchain nodes by key rotation.

### BACKGROUND

In many systems, a key must be processed before it can be useful. For example, a public/private keypair must be processed before it can be used in Secure Socket Layer (SSL) or Transport Layer Security (TLS) communications. After a requestor generates the public/private keypair, the requestor then creates a certificate signing request that ties the public portion of the keypair to an identity such that a Certificate Authority is satisfied. The Certificate Authority, when satisfied with the identity of the requestor, sends back an identity certificate that has been signed by the Certificate Authority. The keypair and certificate are then installed on a system to service secure communication for the requestor. After installation, the keypair and certificate are ready for use and may be considered active.

Use of a single key for an extended period may not be advisable, as a key can become compromised. Key rotation and maintenance can allow administrators to reduce risk of system compromise by reducing the time that a compromised key may be actively used. For example, an administration team can choose to rotate a certificate used for communication over SSL. As many different systems are involved, an administration team may manually perform many steps and manually move information from one system to another. Tools, such as a keypair generator, may be used to aid during the key rotation. Once the administration is satisfied that all servers have the new certificate active, the key rotation may be considered completed. However, key rotation can be both a benefit and problem. Key rotation and maintenance can present security issues as manual intervention and internal and external systems may be involved. For example, keypair generation and installation of a certificate with a private key of the keypair requires access to the private key. If an administrative account is accidently compromised, the private key may be viewed and/or accessed. Similarly, mistakes may happen where a private key is improperly stored, generated or transmitted causing exposure of the private key.

For example, U.S. Patent No. 8.964,990 by Amazon Technologies, Inc. issued on Feb. 24, 2015 (hereinafter "Amazon"), an automated key rotation system in a distributed storage environment using encrypted data may also use key rotation. Storage resources may, for instance, have access to a list of encryption keys used for storage. New incoming data may be encrypted with a preferred key, but outgoing decrypted data may use any key known to the storage resource. By loading a rotated key as non-preferred and then switching the key to preferred after verifying receipt of the key, storage resources are not put in a position of being unable to access encrypted data due to lack of a proper key. All of the distribution of keys by Amazon are done in a centralized and synchronized manner.

Although Amazon teaches the use of key rotation, it fails to completely address the needs of a blockchain environment since the Amazon technology relies on a central key and central key manager where all the nodes would use the same key as pushed by the central key manager. Furthermore, Amazon also may move the private key from the key manager to the nodes in some embodiments leaving open some vulnerabilities.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for enhancing blockchain node security using key rotation among nodes in a nodal network can include one or more processors and memory operatively coupled to the one or more processors, where the memory includes computer instructions which when executed by the one or more processors causes the one or more processors to perform certain operations. The operations can include providing a protection key pair for each blockchain node in the nodal network, providing a keys blockchain for recording nodal-transaction key of the nodal-transaction key pair and a protection key of the protection key pair, and recording a key blockchain transaction that uses an additional signature of a transaction by the protection key.

In some embodiments, the protection key pair remains static and the nodal-transaction keys rotate for a transaction.

In some embodiments, the protection key pair links a nodal rotated key with a same user.

In some embodiments, the keys blockchain records all key change transactions of the node.

In some embodiments, the keys blockchain is used as a reference for node validation by preserving the nodal keys and their rotation history only using a public key portion of the protection key pair.

In some embodiments, the system provides enhanced nodal security by rotating the nodal keys. In some embodiments, enhanced nodal security is provide by rotating the nodal keys periodically. In some embodiments, enhanced security can be provided by rotating the nodal keys for every transaction.

In some embodiments, nodal keys rotate independently without dependency on other nodes in the nodal network.

In some embodiments, the system uses a decentralized peer-to-peer architecture without a central key manager where key rotation is initiated by the node itself. In some embodiments, each node in the nodal network independently uses its own different unique key.

Note, the private key changes when a key rotation happens on the nodal transaction key pair.

In some embodiments, the system is infinitely scalable since the key generation and rotation is managed by each node independent of a central authority.

In some embodiments, the key rotation of the nodes in the nodal network occurs independently.

In some embodiments, a method for enhancing blockchain node security using key rotation among nodes in a nodal network can include the steps of providing a protection key pair for each blockchain node in the nodal network, providing a keys blockchain for recording nodal-transaction key of the nodal-transaction key pair and a protection key of the protection key pair, and recording a key blockchain transaction that uses an additional signature of a transaction by the protection key.

In some embodiments, the method further comprises rotating the nodal keys periodically.

## BRIEF DESCRIPTION OF THE DRAWINGS

The accompanying drawings, which are incorporated in and constitute a part of this description, illustrate embodiments consistent with the embodiments and, together with the description, serve to explain the principles of the embodiments.

FIG. 1 illustrates a peer to peer blockchain network with participating Nodes A, B, C and D;
FIG. 2 illustrates an asymmetric key pair for each Node when it takes birth and becomes part of the blockchain network;
FIG. 3 illustrates a blockchain transaction between participating nodes;
FIG. 4 illustrates a blockchain transaction between participating nodes using a protection key in accordance with the embodiments;
FIG. 5 illustrates a key blockchain where rotation of nodal keys occur and are further recorded in accordance with the embodiments;
FIG. 6 depicts a new change that occurs in the computation of transactions for the transaction blockchain in accordance with the embodiments;
FIG. 7 depicts blockchain transaction which fail to be included in the transaction blockchain in accordance with the embodiments;
FIG. 8 illustrates a flow chart for a method of enhanced blockchain node security in accordance with the embodiments.

Specific embodiments have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments. Instead, they are merely examples of systems, apparatuses and methods consistent with aspects related to the embodiments as recited in the appended claims.

In blockchain, assets that belong to a participant node are controlled through the private key of an asymmetric key pair that is owned by the participant node. Although this lets the blockchain network participants to have sovereignty on their assets, it comes with the responsibility of managing their own keys.

Currently there exists a major bottleneck in securing the private key. A theft on the private key of the participant node can mean a complete loss of the assets of the node participant. A private key thief/hacker, once getting hold of the private key can steal the participant node's assets from the block chain or the genuine node in the block chain could be misrepresented.

Presently, the private key of the asymmetric key pair of the participant node remains static and does not change. If the private key is hacked or stolen the realization of the asset damage sometimes comes too late before a partial or complete loss is inflicted.

Apart from the blockchain, this vulnerability could be found in any other system which relies on asymmetric key pair, for data encryption and for signing a secure data exchange. A private key lost or stolen is a grave compromise on the security of any system.

The vulnerability of the above loss or theft is due to having only one asymmetric key pair in one's wallet or nodal wallet and this sole key pair remains static in the wallet for practically the entire lifetime of the existence of the node.

The purpose of the secondary key pair is to protect the nodal keys as well as preserve the identity of the node. Accordingly, a proposed technical solution to the aforementioned vulnerability emanating by having only one static asymmetric key pair by the node is addressed by a method of key rotation of the node's static key pair as well as using a secondary asymmetric key pair for the purpose of protection and linking the rotated keys of the node's wallet to preserve the identity of the node in the blockchain.

It is to be noted that in a blockchain, each node is identified by its public key. If the public key changes or gets rotated it naturally means that a new node has come into existence. This problem is addressed by the use of a secondary asymmetric key pair owned by the same node.

When a key rotation of the node's primary key pair is done, the newly introduced secondary key pair acts as the linking key between the node's primary key pair and the new rotated key pair and also the subsequent key pairs gotten from more subsequent key rotations.

It is recommended in the embodiments that the key rotation of the node's key is done at a regular interval of time or at least once in the life time of the node to protect itself from the security vulnerability as described above.

The figures are intended to be illustrative and not limiting. Although the invention is generally described in the context of theses embodiments, it should be understood that it is not intended to limit the scope of the invention to these particular embodiments.

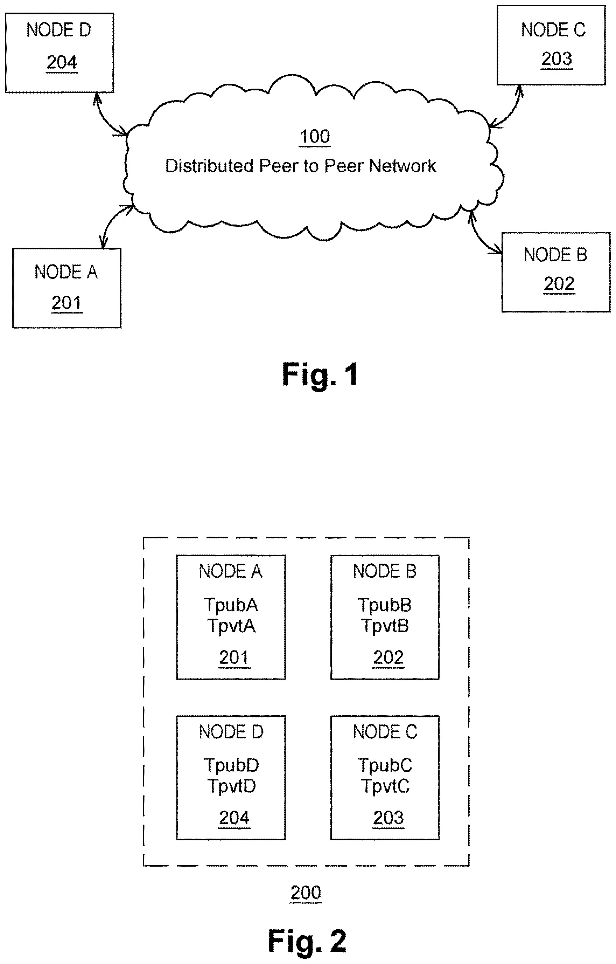

**FIG. 1** describes a peer to peer Blockchain network **100.** The blockchain network **100** consists of the participating nodes, namely **Node A, B , C and D** respectively represented as **201** , **202, 203, 204.** These nodes are the participating nodes in the blockchain network **100** and is a mix of usual transacting nodes and miners.

**FIG. 2** describes a system **200** having an asymmetric key pair for each node when it takes a birth and becomes a part of the blockchain network **100.** For Node A **(201) TpubA** is the public key and **TpvtA** is the private key.

The public key **TpubA** is the address of **Node A** in the blockchain network for sending or receiving the transactions to and from other nodes. **TpvtA** is the private key of **Node A** which is used to sign the transaction initiated by **Node A. TpubA** is also used to verify the signatures done by the key **TpvtA** when a transaction is signed.

For ease to understand the prefix 'T' in the keys **TpubA** and **TpvtA** denotes that these key are used for the Blockchain Transactions or could also be called as transactional keys of a Node.

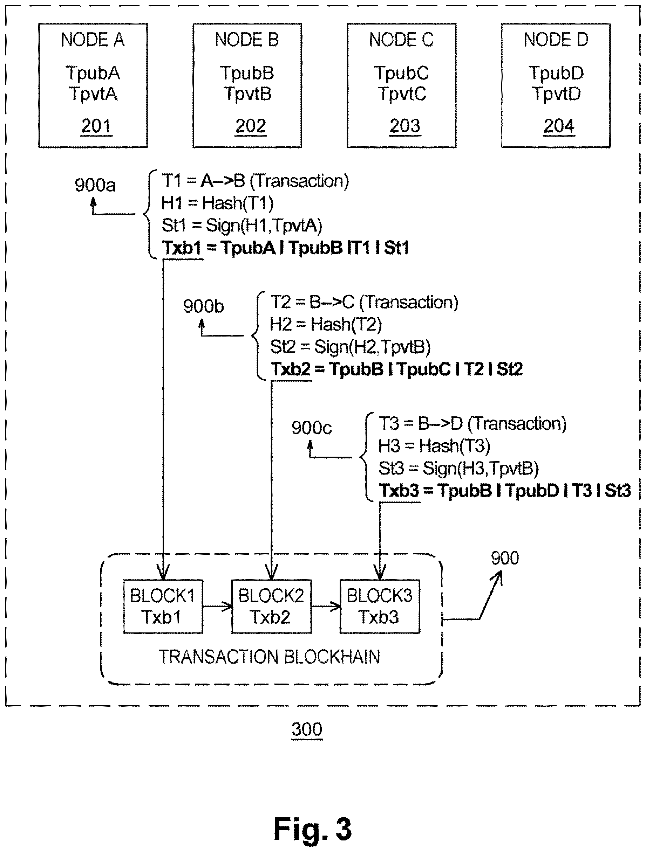

**FIG. 3** depicts a system 300 with a blockchain transaction between the participating nodes. In the example provided, three transactions and their computational steps are shown represented by **900a, 900b and 900c.**

**900** is the blockchain made from the transactions **Txb1, Txb2 and Txb3.**

For clarity, in this example, a block of the blockchain is composed of only one transaction. A block can be composed of more than one transaction for example **Block1** of the Transaction blockchain **900** can be made of **Txb1, Txb2 and Txb3** all collected in one block, etc.

**900a** depicts the steps of how a blockchain transaction is computed for the transaction from Node A to Node B.

**T1** is the transaction from **Node A** to **Node B.**

**H1** is the hash of the transaction **T1.**

**St1** is the signature generated by signing **H1** with the **Node A**'s private key **TpvtA.**

A blockchain transaction **Txb1** is a concatenation of Node A's public key **TpubA,** Node B's (target Node) public key **TpubB,** the transaction itself **T1** and lastly the transactional signature, **St1.**

The Blockchain transaction is structured as follows

$$\text{Txb1 = TpubA I TpubB I T1 I St1}$$

Similarly **900b** and **900c** represent the Blockchain transaction **Txb2** and **Txb3** between **Node B** to **Node C** and between **Node B** to **Node D** respectively and structured as follows

$$\text{Txb2 = TpubB I TpubC I T2 I St2}$$

$$Txb3 = TpubB \mid TpubD \mid T3 \mid St3$$

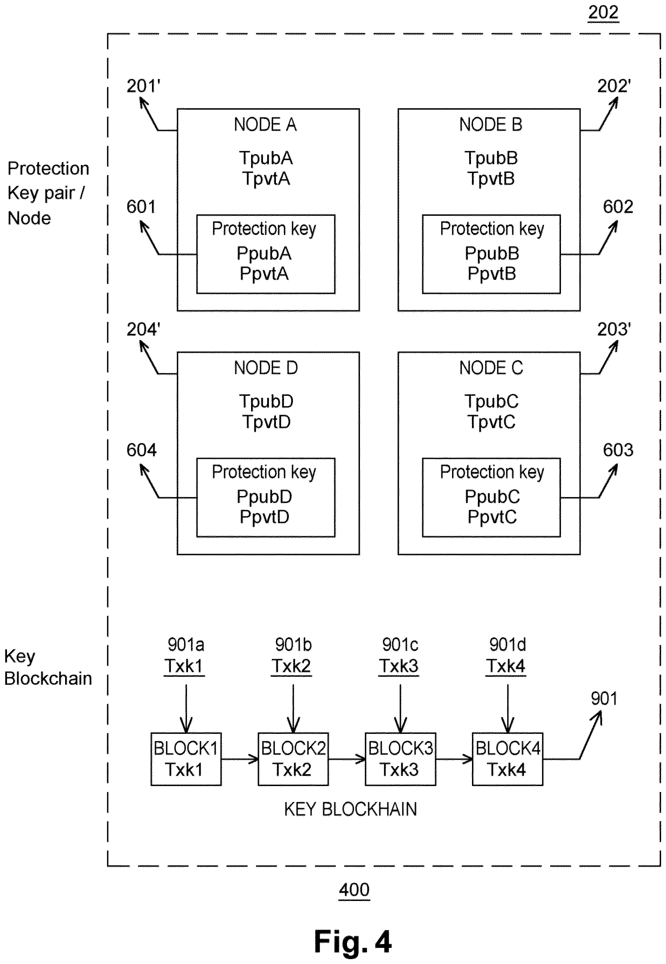

**FIG. 4** depicts a system 400 in accordance with the embodiments. The changes that have been depicted in FIG. 4 relative to FIG. 3 are as follows:

Each node of the Blockchain network generates and owns an additional asymmetric key pair, called the 'Protection Key' of the Node. This Protection key is in addition to the usual Nodal Key pair, as was explained in FIG. 3. This usual Nodal asymmetric key pair is now to be referred as the 'Transaction Key' of the Node.

A new Blockchain is added on top of the usual Blockchain of the transactions. The Blockchain of transactions is depicted as the Blockchain of FIG. 3. This new Blockchain is called the 'Key Blockchain'.

The Key blockchain records two types of transactions. More specifically, the key blockchain records a first type of key transaction when a node takes birth recording both the Transactional key and Protection key of the node and can also record a second type of transaction in the form of a key rotation transaction when the Transactional Key gets changed or rotated.

As the Nodes of the Blockchain network take birth, the keys of each node is recorded in the 'Key Blockchain' via a key blockchain transaction.

The 'Protection key' of each Node remains static for the entire life time of the Node. However, the 'Transactional key' gets changed or rotated. This key rotation could be any of the following or any combination of the following:

Periodic Key rotation

Any event based key rotation, like a Key rotation after every transaction or a group of transactions.

These transactions can be further explained with reference to FIG. 4. In FIG. 4, the new blockchain nodes are depicted as **201', 202', 203' and 204'** representing **Node A, Node B Node C** and **Node D** respectively.

For example, **Node A** has two key pairs, namely.

The 'Transaction Key' pair: **TpubA** and **TpvtA;** and

The 'Protection Key' pair represented as **601: PpubA** and **PpvtA**

Similarly the rest of the Nodes **Node B, C and D** have the Protection Key pair as **602, 603** and **604** respectively in addition to the Transactional key pairs **(TpubB,TpvtB), (TpubC,TpvtC)** and **(TpubD,TpvtD)** respectively.

**901** is the new Key blockchain composed of the blocks **Block1, 2, 3** and **4.** For clarity each of these blocks is composed of only one transaction.

**901a** represents how a key transaction is computed. The fundamental principle is that the Nodal Transactional key signed by the private key part of the Protection key.

**Sk1** is the signature generated by signing **Node A**'s Public Key part (Transactional Key of **Node A**) by the private key part of **Node A**'s Protection Key.

A Key blockchain transaction **Txk1** is a concatenation of Node A's public key **TpubA, Node A**'s Protection key **TpubB** and lastly the key signature, **Sk1.**

The Key blockchain transaction is structured as follows:

$$Txk1 = TpubA \mid PpubB \mid Sk1$$

Similarly **901b, 901c** and **901d** represent the key blockchain transaction **Txk2, Txk3** and **Txk4** respectively and structured as follows

$$Txk2 = TpubB \mid PpubB \mid Sk2$$

$$Txk3 = TpubC \mid PpubC \mid Sk3$$

$$Txk4 = TpubD \mid PpubD \mid Sk4$$

The Transactions **Txk1, Txk2, Txk3 and Txk4** represent the recording of both the Transactional key and Protection key when the **Node A, Node B, Node C** and **Node D** respectively take birth in the blockchain network. In summary, 901a, 901b, 901c, and 901d would formulaically look as follows:

901a: Sk1 = Sign (TpubA, PpvtA) where

$$Txk1 = TpubA \mid PpubA \mid Sk1$$

901b: Sk2 = Sign (TpubB,PpvtB) where

$$Txk2 = TpubB \mid PpubB \mid Sk2$$

901c: Sk3 = Sign (TpubC,PpvtC) where

$$Txk3 = TpubC \mid PpubC \mid Sk3$$

901d: Sk4 = Sign (TpubD,PpvtD) where

$$Txk4 = TpubD \mid PpubD \mid Sk4$$

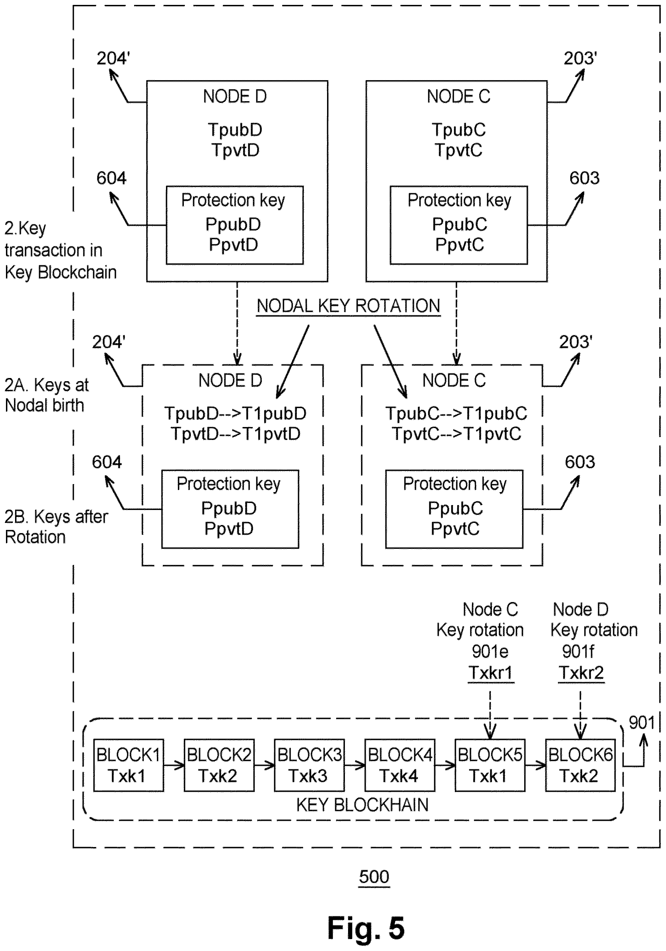

FIG. 5 depicts a system **500** having the key blockchain **901** where the key rotation of the Nodal Transactional Keys happen and are recorded. These are added as new blocks, namely, **Block 5** and **Block 6** of the block chain **901.** These two new blocks are newly added blocks on top of the **Blocks 1, 2, 3** and **4** which were depicted in the Key blockchain **901** of FIG. 4.

In the FIG. 5, the **Node C (203')** undergoes a key rotation of the transactional Key pair.

The Nodal Transactional key rotation is described as follows:

A new asymmetric key pair **T1pubC** and **T1pvtC** is generated. This newly generated asymmetric key pair replaces the old Transactional key pair **TpubC** and **TpvtC** of the **Node C.**

Henceforth, the Transactional key pairs of Node C now become **T1 pubC** and **T1pvtC.** The old transactional Key pair **TpubC** and **TpvtC** become out of use for **Node C.**

Any new transactions done by or done on **Node C** after the above mentioned key rotation can only be done by using the new Transactional Key pair **T1pubC** and **T1pvtC** only.

**901e** describes the computation of the key rotation transaction on **Node C.**

Both the old and the newly generated public key part of the Transactional key is signed by the Protection Key of the Node.

**Sk1** is the signature generated by signing the old public key **TpubC** with the private key part **PpvtC**

Similarly **Skr2** is the signature generated by signing the new public key **T1pubC** with the private key part **PpvtC**

A Key blockchain transaction **Txkr1** is a concatenation of Node C's old public key **TpubC, Node C**'s new Transactional public key **T1pubC** , the Public part of the protection key **PpubC** , the signatures **Sk1** and lastly the signature **Skr2**

The Key blockchain transaction is structured as follows:

$$Txkr1 = TpubC \mid T1pubC \mid PpubC \mid Sk1 \mid Skr2$$

Similarly **901f** represents the key blockchain transaction **Txkr2** and structured as follows

$$Txkr2 = TpubD \mid T1pubD \mid PpubD \mid Sk3 \mid Skr4$$

The two transactions **TxKr1** and **TxKr2** are added in the block chain **901** in the blocks 5 and 6 respectively.

Thus the key block chain **901** in figure 5 depicts both the key transaction at the birth of the node (**Block1** to **Block4**) as well as the key transaction on the key rotation (**Blocks** and **Block6**). In summary, Node C key rotation 901e and Node D Key rotation 901f would formulaically look as follows:

$$\textbf{Node C Key rotation } \underline{\textbf{901e}} \begin{cases} TpubC \rightarrow T1pubC \text{ (New Public Key)} \\ TpvtC \rightarrow T1pvtC \text{ (New Private Key)} \\ Sk1 = Sign(\ TpubC, PpvtC) \\ Skr2 = Sign(\ T1pubC, PpvtC) \\ \textbf{Txkr1 = TpubC I T1pubC I PpubC I Sk1 I Skr2} \end{cases}$$

$$\text{Node D Key rotation } \underline{901f} \begin{cases} \text{TpubD} \rightarrow \text{T1pubD (New Public Key)} \\ \text{TpvtC} \rightarrow \text{T1pvtD (New Private Key)} \\ \text{Sk3} = \text{Sign( TpubD,PpvtD)} \\ \text{Skr4} = \text{Sign( T1pubD,PpvtD)} \\ \text{Txkr2} = \text{TpubD I T1pubD I PpubD I Sk3 I Skr4} \end{cases}$$

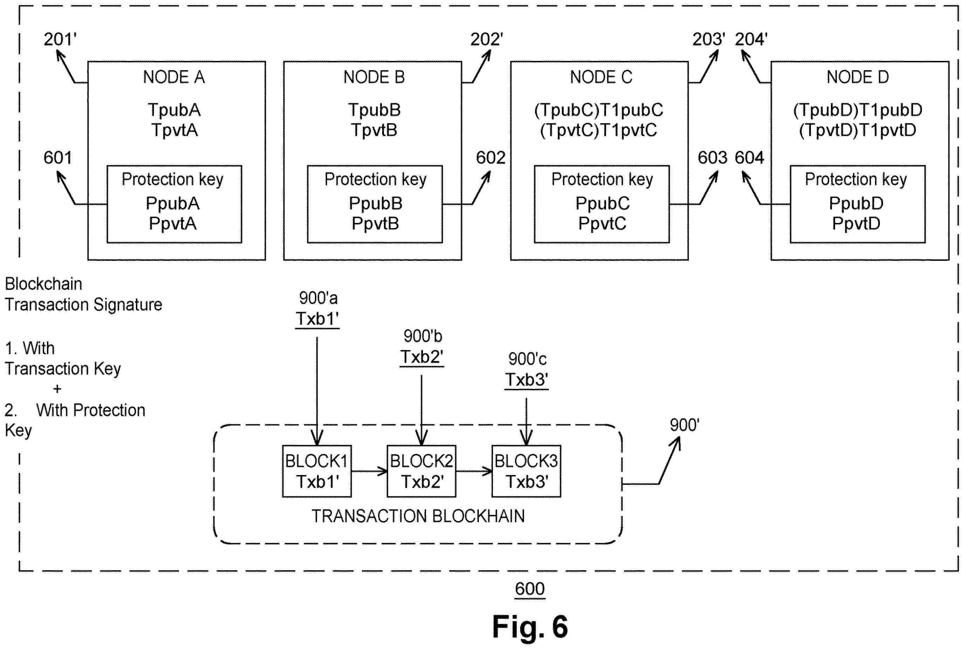

**FIG. 6** depicts a system 600 with the new change that occur in the computation of transactions for the transaction block chain.

The Nodes **203'** and **204'** have their keys rotated while the nodes **201'** and **202'** do not have the key rotations on their transactional keys.

900' is the new Transaction block chain composed of inter transactions between four nodes.

900'a explains the computation of the transaction between Node A and Node B

The transaction **Txb1' = TpubA I PpubA I TpubB I T1' I St1' I Sk1' I Skt1'**

The new additions in this transaction compared to the usual blockchain transactions as depicted in FIG. 3 is as follows:

The public part of the Protection key **PpubA**

A key signature **Sk1'** is generated which by signing the Transactional public key of **Node A** by **PpvtA**

Another key signature **Skt1'** is generated which by signing the Transaction **T1'** of by **PpvtA**

Similarly **Txb2'** depicts the transactions between **Node B** and **Node** C

**Txb3'** depicts the transactions between **Node** C and **Node** D

**900'** is the transaction blockchain formed of the Blocks 1 to 3 composed of the three transactions **Txb1', Txb2' and Txb3'.** In summary, 900'a, 900'b, and 900'c would formulaically look as follows:

## 900'a:

$$\begin{cases} \text{T1'} = \text{A} \rightarrow \text{B (Transaction)} \\ \text{H1'} = \text{Hash (T1')} \\ \text{St1'} = \text{Sign( H1',TpvtA)} \\ \text{Sk1'} = \text{Sign( TpubA,PpvtA)} \\ \text{Skt1'} = \text{Sign( H1',PpvtA)} \\ \text{Txb1'} = \text{TpubA I PpubA I TpubB I T1' I St1' I Sk1' I Skt1'} \end{cases}$$

## 900'b:

$$\begin{cases} \text{T2'} = \text{B} \rightarrow \text{C (Transaction)} \\ \text{H2'} = \text{Hash (T2')} \\ \text{St2'} = \text{Sign( H2',TpvtB)} \\ \text{Sk2'} = \text{Sign( TpubB,PpvtB)} \\ \text{Skt2'} = \text{Sign( H2',PpvtB)} \\ \text{Txb2'} = \text{TpubB I PpubB I T1pubC I T2' I St2' I Sk2' I Skt2'} \end{cases}$$

**900'c:**

$$\begin{cases} T3' = C \rightarrow D(\text{Transaction}) \\ H3' = \text{Hash}(T3') \\ St3' = \text{Sign}(H3', T1pvtC) \\ Sk3' = \text{Sign}(T1pubC, PpvtC) \\ Skt3' = \text{Sign}(H3', PpvtC) \\ Txb3' = T1pubC \mid PpubC \mid T1pubD \mid T3' \mid St3' \mid Sk3' \mid Skt3' \end{cases}$$

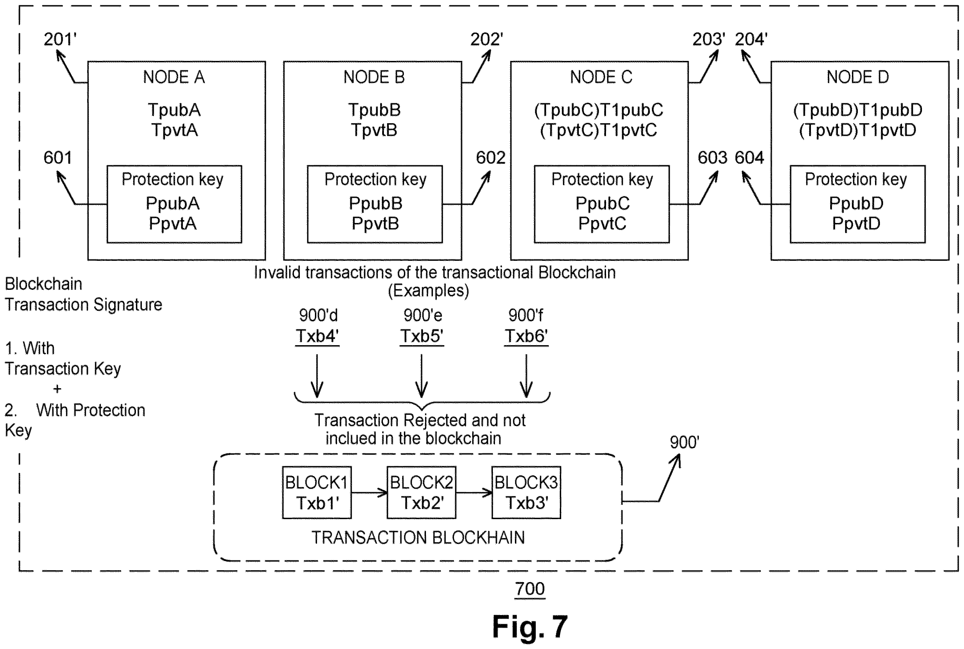

**FIG. 7** depicts a system **700** with the blockchain transactions which fail to be included in the Transaction block chain.

**900'd** is a wrong transaction between **Node B** and **Node C.** The reason is that for Node C old transactional public key **TpubC** is used, it should have been **T1pubC** because Node C has undergone a key rotation of its Transactional key and the old key is not valid any more.

**900'e** is a wrong transaction between **Node C** and **Node D.** The reason is that in generating the signature **St3'** wrong key is used for signing. The correct key should be **T1pvtC** as Node C has undergone a key rotation of its Transactional key and the old key is not valid any more.

**900'f** is a wrong transaction between **Node C** and **Node D.** The reason is that in generating the signature **Sk4'** and **Skt4'** wrong key is used for signing. The correct key should be **PpvtC.**

Owing to the failure in their validations, the transactions 900'd, 900'e, and 900'f do not get added by the Blockchain miners in to the block chain **900'.** In summary, invalid transaction 900'd, 900'd, and 900'f of the transactional blockchain would formulaically look as follows:

**900'd**
$$\begin{cases} T2' = B \rightarrow C \ (\text{Transaction}) \\ H2' = \text{Hash}(T2') \\ St2' = \text{Sign}(H2', TpvtB) \\ Sk2' = \text{Sign}(TpubB, PpvtB) \\ Skt2' = \text{Sign}(H2', PpvtB) \\ Txb4' = TpubB \mid PpubB \mid TpubC \mid T2' \mid St2' \mid Sk2' \mid Skt2' \end{cases}$$

**900'e**
$$\begin{cases} T3' = C \rightarrow D(\text{Transaction}) \\ H3' = \text{Hash}(T3') \\ St3' = \text{Sign}(H3', TpvtC) \\ Sk3' = \text{Sign}(T1pubC, PpvtC) \\ Skt3' = \text{Sign}(H3', PpvtC) \\ Txb5' = T1pubC \mid PpubC \mid T1pubD \mid T3' \mid St3' \mid Sk3' \mid Skt3' \end{cases}$$

**900'f**
$$\begin{cases} T4' = C \rightarrow D(\text{Transaction}) \\ H4' = \text{Hash}(T4') \\ St4' = \text{Sign}(H4', T1pvtC) \\ Sk4' = \text{Sign}(T1pubC, PpvtC') \\ Skt4' = \text{Sign}(H4', PpvtC') \\ Txb6' = T1pubC \mid PpubC \mid T1pubD \mid T4' \mid St4' \mid Sk4' \mid Skt4' \end{cases}$$

Transaction Rejected and not included in the blockchain

The embodiments herein are more advantageous if the Protection private Key of a node is stored separately and isolated from the Transactional private Key of the node. For example, the two private keys could be stored in two different HSMs or Key vaults. This way even if the transactional private key of the Node is stolen/hacked/plundered the hacker would not be able to execute any transaction as the Protection key would also be needed.

Note that a system for enhancing blockchain node security as described herein can be used in various environments. For example, such a system can be used with a Thales Luna K7 Cryptographic Module which is a Hardware Security Module (HSM) in the form of a PCI-E card (Thales Luna PCIe HSM). It is operated in a controlled environment and can be used either as a standalone device to be inserted in a server, or as a device embedded in a Thales Luna Network HSM. The embodiments however are not limited to any particular HSM or key vaults and can be adapted for most environment requiring added security.

Furthermore, the history of Nodal keys right from birth to the last key rotation remains preserved in the Key block chain. The Protection key of the node provides a link between the new Nodal transaction key and the old Transactional key. This way, a Node preserves its identity in spite of its transactional key change. This advantage is not present in existing blockchain implementations where if the Nodal key changes it is regarded as a new node in the blockchain network.

In the embodiments herein, a blockchain transaction is now signed by two private keys of the node instead of one. As an augmentation of the embodiments, and for increased security of the Nodal keys and their transactions, the number of Protection Key pairs could be greater than 1. This would mean that each transaction could be signed by more private keys of the same node with added security.

As a further augmentation of the embodiments herein, the Protection keys can themselves be rotated with the help of another set of new Protection keys giving advantages of enhanced security.

The embodiments herein can prevent unnecessary/uncontrolled proliferation of Nodes in the blockchain network. A node once born in the Blockchain network can change its public keys and yet remain associated with the same Nodal owner.

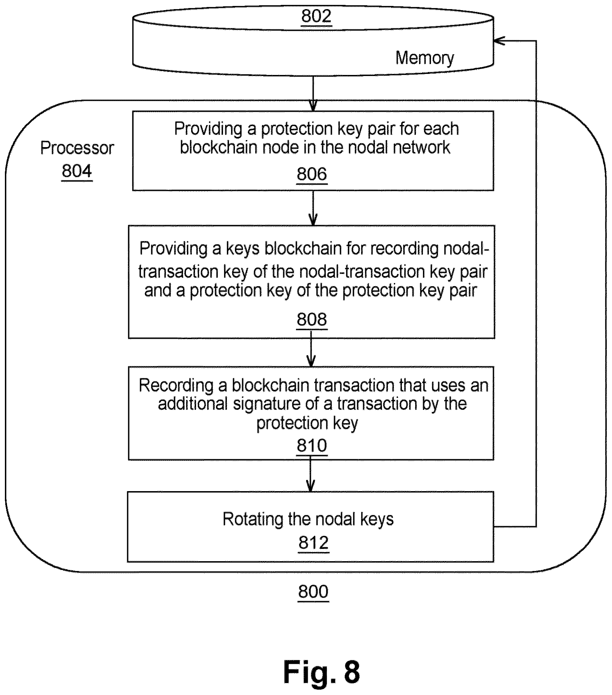

In some embodiments, with further reference to a method 800 as illustrated in FIG. 8, read and writes from a file in memory 802 can be analyzed by a processor 804. The processor 804 can perform a method of enhanced blockchain node protection including providing a protection key pair for each blockchain node in a nodal network at step 806, providing a keys blockchain for recording nodal transaction key of the nodal-transaction key pair and a protection key of the protection key pair at step 808 and then at step 810 recording a blockchain transaction that uses an additional signature of the transaction by the protection key. The method 800 can further include the step of rotating the nodal (transaction) keys.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (400) for enhancing blockchain node security using key rotation among nodes in a nodal network, comprising:

   one or more processors (804) and memory (802) operatively coupled to the one or more processors, wherein the memory includes computer instructions which when executed by the one or more processors causes the one or more processors to perform the operations of:

   providing a protection key pair (601, 602, 603, 604) for each blockchain node (201', 202', 203', 204") in the nodal network;
   providing a keys blockchain (901) for recording nodal-transaction key of the nodal-transaction key pair and a protection key of the protection key pair; and
   recording a blockchain transaction that uses an additional signature of a transaction by the protection key.

2. The system of claim 1, wherein the protection key pair remains static and the nodal-transaction keys rotate for a transaction.

3. The system according to any one of the preceding claims, wherein the protection key pair links a nodal rotated key with a same user.

4. The system according to any one of the preceding claims, wherein the keys blockchain records all key change transactions of the node.

5. The system according to any one of the preceding claims, wherein the keys blockchain is used as a reference for node validation by preserving the nodal keys and their rotation history only using a public key portion of the protection key pair.

6. The system according to any one of the preceding claims, wherein the system provides enhanced nodal security by rotating the nodal keys.

7. The system according to any one of the preceding claims, wherein the system provides enhanced nodal security by rotating the nodal keys periodically.

8. The system according to any one of the preceding claims, wherein nodal keys rotate independently without dependency on other nodes in the nodal network.

9. The system according to any one of the preceding claims, wherein the system uses a decentralized peer-to-peer architecture without a central key manager where key rotation is initiated by the node itself.

10. The system according to any one of the preceding claims, wherein each node in the nodal network independently uses its own different unique key.

11. The system according to any one of the preceding claims, wherein private keys of the protection key pair do not move at all during key rotation.

12. The system according to any one of the preceding claims, wherein the system is infinitely scalable since the key generation and rotation is managed by each node independent of a central authority.

13. The system according to any one of the preceding claims, wherein key rotation of the nodes in the nodal network occurs independently.

14. A method (800) for enhancing blockchain node security using key rotation among nodes in a nodal network in a computing environment having one or more processors (804) and memory (802) operatively coupled to the one or more processors, wherein the memory includes computer instructions which when executed by the one or more processors causes the one or more processors to perform the operations of:

    providing (806) a protection key pair for each blockchain node in the nodal network;
    providing (808) a keys blockchain for recording nodal-transaction key of the nodal-transaction key pair and a protection key of the protection key pair; and
    recording (810) a blockchain transaction that uses an additional signature of a transaction by the protection key.

15. The method of claim 14, wherein the method further comprises rotating (812) the nodal keys periodically.

**Fig. 1**

**Fig. 2**

**Fig. 3**

202

Protection
Key pair /
Node

201'

NODE A

TpubA
TpvtA

601

Protection key
PpubA
PpvtA

202'

NODE B

TpubB
TpvtB

602

Protection key
PpubB
PpvtB

204'

NODE D

TpubD
TpvtD

604

Protection key
PpubD
PpvtD

203'

NODE C

TpubC
TpvtC

603

Protection key
PpubC
PpvtC

Key
Blockchain

901a
Txk1

901b
Txk2

901c
Txk3

901d
Txk4

901

BLOCK1
Txk1

BLOCK2
Txk2

BLOCK3
Txk3

BLOCK4
Txk4

KEY BLOCKHAIN

400

# Fig. 4

204'

203'

NODE D

TpubD
TpvtD

604

Protection key
PpubD
PpvtD

NODE C

TpubC
TpvtC

603

Protection key
PpubC
PpvtC

2.Key
transaction in
Key Blockchain

NODAL KEY ROTATION

204'

203'

2A. Keys at
Nodal birth

NODE D

TpubD-->T1pubD
TpvtD-->T1pvtD

604

Protection key
PpubD
PpvtD

NODE C

TpubC-->T1pubC
TpvtC-->T1pvtC

603

Protection key
PpubC
PpvtC

2B. Keys after
Rotation

Node C
Key rotation
901e
Txkr1

Node D
Key rotation
901f
Txkr2

901

| BLOCK1 Txk1 | BLOCK2 Txk2 | BLOCK3 Txk3 | BLOCK4 Txk4 | BLOCK5 Txk1 | BLOCK6 Txk2 |

KEY BLOCKHAIN

500

# Fig. 5

201'

NODE A

TpubA
TpvtA

601

Protection key
PpubA
PpvtA

202'

NODE B

TpubB
TpvtB

602

Protection key
PpubB
PpvtB

203' 204'

NODE C

(TpubC)T1pubC
(TpvtC)T1pvtC

603 604

Protection key
PpubC
PpvtC

NODE D

(TpubD)T1pubD
(TpvtD)T1pvtD

Protection key
PpubD
PpvtD

Blockchain
Transaction Signature

1. With
Transaction Key

    +

2.   With Protection
Key

900'a
Txb1'

900'b
Txb2'

900'c
Txb3'

900'

BLOCK1
Txb1'

BLOCK2
Txb2'

BLOCK3
Txb3'

TRANSACTION BLOCKHAIN

600

## Fig. 6

201'                               202'                    203' 204'

| NODE A | NODE B | NODE C | NODE D |
|---|---|---|---|
| TpubA<br>TpvtA | TpubB<br>TpvtB | (TpubC)T1pubC<br>(TpvtC)T1pvtC | (TpubD)T1pubD<br>(TpvtD)T1pvtD |

601

602

603 604

| Protection key<br>PpubA<br>PpvtA | Protection key<br>PpubB<br>PpvtB | Protection key<br>PpubC<br>PpvtC | Protection key<br>PpubD<br>PpvtD |
|---|---|---|---|

Blockchain
Transaction Signature

Invalid transactions of the transactional Blockchain
(Examples)

1. With
Transaction Key
     +
2.    With Protection
Key

900'd          900'e          900'f
Txb4'          Txb5'          Txb6'

Transaction Rejected and not
inclued in the blockchain

900'

| BLOCK1<br>Txb1' | → | BLOCK2<br>Txb2' | → | BLOCK3<br>Txb3' |
|---|---|---|---|---|

TRANSACTION BLOCKHAIN

700

## Fig. 7

**Fig. 8**

Europäisches
Patentamt
European
Patent Office
Office européen
des brevets

# EUROPEAN SEARCH REPORT

**Application Number**

EP 24 19 5545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/056424 A1 (VENKATESAN RAMARATHNAM [US] ET AL) 15 February 2024 (2024-02-15)<br>* paragraphs [0042], [0046] - [0054], [0063] - [0068]; figures 1-4 * | 1-15 | INV.<br>H04L9/08<br>H04L9/00 |
| A | US 11 483 132 B2 (META PLATFORMS INC [US]) 25 October 2022 (2022-10-25)<br>* column 1; figures 1,2 * | 1-15 | |
| A | US 2021/014073 A1 (CURRIE MARK [KY] ET AL) 14 January 2021 (2021-01-14)<br>* paragraphs [0006] - [0014] * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 26 January 2025 | Billet, Olivier |

## ANNEX TO THE EUROPEAN SEARCH REPORT
## ON EUROPEAN PATENT APPLICATION NO.

EP 24 19 5545

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2025

| Patent document cited in search report | | Publication date | Patent family member(s) | | Publication date |
|---|---|---|---|---|---|
| US 2024056424 | A1 | 15-02-2024 | US | 2024056424 A1 | 15-02-2024 |
| | | | WO | 2024035503 A1 | 15-02-2024 |
| US 11483132 | B2 | 25-10-2022 | US | 2022182222 A1 | 09-06-2022 |
| | | | US | 2023010791 A1 | 12-01-2023 |
| | | | WO | 2022120254 A1 | 09-06-2022 |
| US 2021014073 | A1 | 14-01-2021 | EP | 3769463 A1 | 27-01-2021 |
| | | | US | 2021014073 A1 | 14-01-2021 |
| | | | WO | 2019180457 A1 | 26-09-2019 |

EPO FORM P0459

For more details about this annex : see Official Journal of the European Patent Office, No. 12/82

## REFERENCES CITED IN THE DESCRIPTION

### Patent documents cited in the description

- US 8964990 B